# EUROPEAN PATENT APPLICATION

(11) **EP 4 249 956 A1**
(43) Date of publication of application: **27.09.2023**
(21) Application number: 23161967.7
(22) Date of filing: 15.03.2023
(51) Int. Cl.: G01S 15/52, G01S 15/58, G01S 15/10, G08B 13/16

(54) **MOVEMENT ALERT SYSTEM**

(30) Priority: 23.03.2022 IT 202200005705
(71) Applicant: Vodafone Automotive S.p.A., 21100 Varese (VA) (IT)
(72) Inventor: BAITINI, Mario, London, W2 6BY (GB); GIAVARINI, Flavio, London, W2 6BY (GB)
(74) Representative: Boult Wade Tennant LLP

(57) **Abstract**

The present disclosure relates to a method for detecting a moving object within a monitored zone, comprising emitting a signal pulse towards the monitored zone for reflection by objects and receiving a reflected signal. The method further comprises analysing the reflected signal to identify the presence or absence of a Doppler shifted portion. If the Doppler shifted portion is identified as present, then a time delay between emitting of the signal and receiving of the Doppler shifted portion of the reflected signal is determined to indicate a position of a moving object from which the Doppler shifted portion of the reflected signal was reflected. The method further comprises determining, using the position, whether the moving object is within the monitored zone.

## Description

### Field of the Invention

The present invention relates to a method and a system for detecting a moving object within a monitored zone, in particular for use as part of an intrusion detection and alert system.

### Background to the Invention

Movement detection systems have many and varied applications. Such systems can be used to identify an unexpected movement in an area of surveillance, for instance within a building or a inside the cabin of a vehicle. This in turn can form part of an intruder or burglar detection and alarm system, or within safety systems to identify incursion into a restricted area.

Use of ultrasound signals as part of movement detection systems is known in the art. The simplest of such systems monitors for variations in ultrasonic waves reflected from objects within a monitored area. However, straightforward systems of this type can be prone to false identification of intruders within the monitored area, as a consequence of normal and mundane air turbulence or vibrations from loud noises outside the monitored area.

U.S. Patent No. 5,973,996 describes an ultrasound intrusion detector for detecting the presence of a moving object in a detection area. The system emits a sequence of bursts of ultrasonic energy into the area, and receives ultrasonic energy reflected from within the detection area in response to the sequence of bursts. The system bins the reflected signal received according to the time delay since sending the pulse, and subsequently analyses changes in the amount of signal reflected from objects at different distances. This allows identification of an object moving within the monitored zone. However, such analysis of successive bursts of ultrasonic energy consumes significant amounts of power whilst the system is in its monitoring state.

Electromagnetic, rather than ultrasonic, signals can also be used as part of movement detection systems. European Patent No. 0,023,625 describes an alarm system for a zone around a protected object. The system uses pulsed electromagnetic wave signals (which may require a system of multiple or rotating antenna) and is based on the Doppler effect. The system transmits pulsed electromagnetic wave signals, and then receives electromagnetic wave signals reflected from objects in the vicinity. Only electromagnetic wave signals received within a specific predetermined time period (delayed with respect to the transmitted pulses) are analysed, in order to provide a radially limited alarm zone in a desired distance bracket surrounding an object to be protected. A Doppler shifted portion of the reflected electromagnetic wave signals is identified by analysis of the phase of received signals within the predetermined time period, wherein a Doppler shifted portion signifies reflection from a moving object.

In the field of intrusion detection, there is a continued problem of distinguishing between a malicious moving object (in particular an intruder) within a specific and well-defined space, rather than a moving object in another close or adjacent area or an otherwise innocuous movement. This can especially be a problem in vehicle intrusion detection systems, where innocent movements can take place immediately outside the confines of the vehicle cabin, and for which the alert system should not be triggered. Moreover, objects very close to an intrusion detector may provide a high reflected signal strength, resulting in false alarms from benign small objects close to a transmitter in a vehicle intrusion system (such as insects).

As such, the present invention seeks to provide a system for detecting a moving object within a monitored zone, without the drawbacks of existing systems.

### Summary of the Invention

There is described a system and method for identification of a moving object within a monitored zone. In particular, the system emits signal pulses and then identifies a Doppler shifted portion within signal reflected from objects inside or outside of the monitored zone. The Doppler shifted portion indicates the presence of a moving object. Subsequently, the time of flight for the Doppler shifted portion is determined in order to indicate a position of the moving object. The position of the moving object is compared to predetermined boundaries for the monitored zone, to identify whether the moving object is within those boundaries. In the event that a moving object is identified within the monitored zone, the system can activate an alert or can move the system to a different mode for further monitoring (such as a mode where a continuous signal is emitted for subsequent reflection and receipt). Beneficially, the system reduces false alerts and/or reduces the time in which the system is unnecessarily in the further (continuous) mode (which may be more power consuming).

In a first aspect, there is described a
method for detecting a moving object within a monitored zone, comprising:
emitting a signal pulse towards the monitored zone, for reflection by objects;
receiving a reflected signal;
analysing the reflected signal to identify the presence or absence of a Doppler shifted portion;
wherein if the Doppler shifted portion is present, then:
   determining a time delay between emitting of the signal and receiving of the Doppler shifted portion of the reflected signal to indicate a position of a moving
object from which the Doppler shifted portion of the reflected signal was reflected;
determining, using the position, whether the moving object is within the monitored zone.

The signal is a pulse, in that the signal is emitted periodically at approximately constant amplitude between intervals during which no signal is emitted. The intervals between pulses are sufficient to allow different pulses to be distinguished in the reflected signal. In one example, the period of the pulse would be around 250 ms with a duty cycle of around 25% (for instance an 'on' period of around 60 ms, with an 'off' period of around 190 ms). However, a duty cycle of less than 40%, less than 25%, less than 20%, or less than 15% could be used. The signal may be a longitudinal wave (such as an electromagnetic signal) or a transverse wave (such as a sound wave). Preferably, the signal pulse is an ultrasonic pulse (being a ultrasonic energy pulse or ultrasonic wave).

The signal is emitted by a transmitter and may be directed towards the monitored zone. However, it will be understood that the signal may spread or extend to areas outside of the monitored zone. The signal will be reflected from the surface of objects within its path. At least a portion of the reflected signal may be received at a receiver. The transmitter and receiver may be different entities, at different locations, or the transmitter and receiver may be the same entity (a transceiver) at the same location.

It will be understood that a series or succession of signal pulses may be emitted to monitor the monitored zone. The pulses continue until a moving object is identified in the monitored zone according to the described method, or the method and system is deactivated.

The reflected signal is analysed to identify a Doppler shifted portion, for instance by identifying an unexpected peak in the demodulated signal amplitude over time (whereby an expected initial peak is disregarded), or by identifying a second frequency in the received, reflected signal. The presence of a Doppler shifted portion of the received, reflected signal indicates that at least some of the signal was reflected from a moving object.

The time delay (or time of flight) for the Doppler shifted portion of the received, reflected signal can be established. This may be established by determining the time between a predetermined position of the original signal pulse (for instance the start or end of the wave packet) and a predetermined position of the Doppler shifted signal (for instance the start of the Doppler shifted portion). The time delay can be used as a metric of the distance of the moving object from the transmitter and/or receiver, and/or the position or location of the moving object. By comparison of the indicated position or location with a predetermined boundary of the monitored zone, it can be determined whether the moving object from which the reflected signal was received is inside the monitored zone. It will be understood that the time delay may be used to determine a distance or position of the moving object explicitly, or the time delay itself may be used in a comparison with the expected time delay to the boundary of the monitored zone in order to indicate whether the moving object is within the monitored zone.

Preferably, when the moving object is determined to be within the monitored zone, then the method further comprises:
triggering an alert; or
initiating continuous monitoring of the monitored zone.

In other words, once a moving object within the monitored zone has been identified, an alarm or alert may be triggered immediately. Alternatively, the system may be moved to a further (often more energy intensive) mode for continuous monitoring to verify whether the moving object is an unwanted intruder or merely a one-off or innocuous event. The continuous monitoring mode is described further below.

Preferably, triggering an alert comprises one or more of: initiating an alarm, or transmitting an alert to a predetermined recipient. The alarm may be initiated at the system carrying out the method (i.e. in the monitored zone), or at a predetermined location (for instance, at a security company, or at a user's mobile device). In an example, transmitting an alert comprises transmitting the alert over a cellular network or telecommunication network where, for instance, the alert may be a voice call, a text message, an IMS message or an application notification.

Instead of triggering an alarm or moving to continuous monitoring, after an initial determination of a moving object within the monitored area the system may instead continue to monitor in a pulsed mode for at least a short period. For instance, this could comprise repeating the previously described steps to identify if a moving object continues to be identified in the monitored area across a number or sequence of pulses. In an example, an alarm may be triggered or the system may move to a continuous monitoring mode if the moving object is identified within the monitored zone across a threshold number of pulses (which would equate to a particular time interval). Alternatively, the repetition of the previously described steps could also allow the system to build a map of the change in position or the pathway of a moving object across successive pulses, and then trigger an alert or move to continuous mode if certain conditions are met in relation to the pathway or movement of the moving object.

For instance, in one example the method for detecting a moving object within a monitored zone is a method for identifying a possible intruder within the monitored zone, and the method further comprises:
repeating each of the steps described above a predetermined number of times;
wherein a possible intruder is identified if the moving object is determined to be within the monitored zone for more than a threshold number of repetitions; or
wherein a change in the position of the moving object is determined, and a possible intruder is identified if the change of the position of the moving object meets a predetermined threshold. In a similar manner to that described above, when a potential intruder is identified within the monitored zone then the method may further comprise triggering an alert or initiating continuous monitoring of the monitored zone. In this example, the change of the position of the moving object may be a rate of change of the position of the moving object, the velocity of the moving object, or the trajectory of the moving object.

The emitter and/or receiver may be a transceiver. In other words the emitter (otherwise described as a transmitter) and receiver may be a single entity, i.e. a transceiver, located at the same position. However, the emitter and receiver may be different entities at different locations. Multiple pairs of emitters and receivers may be used, or different numbers of emitters may be used compared to receivers. For instance, one emitter may be used that is directed across the whole of the monitored zone, whilst multiple receivers may be used to receive reflected signal. In the latter case, triangulation of received reflected signal at different receivers could be used to more precisely locate the moving object.

In one example, the determined time delay itself is used in a comparison to determine whether the moving object is within the monitored zone. For instance, determining whether the moving object is within the monitored zone may comprise comparing the time delay with a predetermined threshold time delay range, wherein the moving object is within the monitored zone if the time delay is within the predetermined time delay range. In this instance, the predetermined threshold time delay range is correlated to a distance that could be travelled within the perimeter or boundary of the monitored zone. This type of comparison to determine whether the moving object is within the monitored zone may be the most straightforward and computationally efficient method of analysis.

In an alternative or additional example, the indicated position of the moving object is a distance of the moving object from a transmitter configured to emit the signal pulse, and/or a distance of the moving object from a receiver configured to receive the reflected signal. Determining whether the moving object is within the monitored zone may then comprise comparing the distance with a predetermined threshold range for the distance, wherein the moving object is within the monitored zone if the distance is within the predetermined threshold range. Such a system may provide more sophisticated mapping of the position of the moving object. In this instance, the predetermined distance threshold range is indicative of the distance of the perimeter or boundary of the monitored zone to the transmitter or receiver. The predetermined distance threshold range may be different in different directs from the transmitter or receiver.

Preferably, analysing the reflected signal to identify the presence or absence of a Doppler shifted portion comprises analysing the reflected signal to identify a peak or trough in an amplitude demodulated signal of the received reflected signal, wherein if the amplitude of an identified peak or trough has an absolute value that is more than a predetermined amplitude threshold, then the presence of the Doppler shifted portion is identified. In other words, the presence of a Doppler shifted portion in the received, reflected signal can be established by identifying an unexpected feature (peaks and/or troughs) in a plot of the amplitude demodulated signal of the received, reflected signal over time. Said amplitude demodulated signal represents the Doppler signal, by which is meant the result of a comparison of the received, reflected signal packet with the emitted signal packet, wherein the comparison yields a zero signal if no Doppler shift is present. The received, reflected signal may be smoothed and/or time averaged (or rectified and filtered) before demodulation to identify a Doppler shifted portion.

It is noted that said amplitude demodulated signal representing the Doppler signal is reflective of the shape of the envelope (a smooth curve outlining the extremes) of the received, reflected signal prior to demodulation. A peak or trough in the envelope having absolute amplitude greater than the predetermined threshold also represents the presence of a Doppler shifted portion.

Additionally or alternatively, identification of a Doppler shifted portion may comprise identifying that a portion of the received, reflected signal has a frequency different from the frequency of the emitted signal pulse by more than a predetermined threshold. In one example, a plot of frequency of the received, reflected signal versus time could be used to identify a second frequency. Alternatively, a Fourier transform could be used to identify frequencies present in the received, reflected signal (although calculation of a Fourier transform is computationally intensive). It is noted that when analysing the frequency of the received, reflected signal a first frequency will always be present - that of the transmitted signal, which will also be the frequency of the received signal reflected from a stationary surface. A second frequency will be apparent if part of the signal is reflected from a moving object and so Doppler shifted.

Preferably, where the presence or absence of a Doppler shifted portion comprises analysing the reflected signal to identify a peak or trough in an amplitude demodulated signal of the received reflected signal, then determining the time delay between emitting of the signal and receiving of the Doppler shifted portion of the reflected signal comprises determining the time elapsed between beginning of emitting of the signal pulse and start of a first identified peak or trough. The beginning of emitting of the signal pulse may be considered the start of the pulse active time, or start of the 'on' portion of the signal pulse duty cycle, for instance. The start of a first identified peak or trough may be considered the start (initial rise or fall) of the earliest occurring peak or trough feature in the demodulated reflected signal after the beginning of emitting of the signal pulse.

Preferably, initiation of continuous monitoring of the monitored zone comprises:
emitting a continuous signal towards the monitored zone, for reflection by objects;
receiving a reflected signal;
analysing the reflected signal to identify the presence or absence of a Doppler shifted portion indicating a moving object;
wherein if the Doppler shifted portion is present, then:
   comparing one or more parameter to a respective predetermined threshold, the one or more parameter being:
   an absolute value of an amplitude of an identified peak or trough in any identified Doppler shifted portion;
   a time period over which any Doppler shifted portion is identified; and/or
   a difference in frequency of any Doppler shifted portion compared to the frequency of emission;
wherein if the one or more parameters is greater than its respective predetermined threshold, then triggering an alert.

Although the continuous monitoring of the monitored zone (in contrast to pulsed monitoring) is more energy intensive, it allows a more complete and reliable determination of the presence of an unwanted intruder into a monitored zone. Continuous monitoring follows similar steps as described above except that the emitted signal is continuous, rather than pulsed. This allows certain characteristics of the moving object to be determined, but does not allow the determination of the time delay between emission and receipt of a signal reflected from a moving object as there is no distinguishing feature of the emitted signal (such as the start of a wave packet) from which the time of flight can be established. This means that, in a continuous mode, the system cannot identify if the moving object is in the monitored zone in the same way as discussed above for the pulsed mode.

Nevertheless, in the continuous mode, other features of the Doppler shifted portion of the reflected signal can provide parameters for the moving object that may be used to distinguish between an unwanted intruder and an innocuous movement or vibration. For instance, the amplitude of any identified Doppler shifted portion can potentially provide a broad indication of the size of the reflecting moving surface (when coupled with knowledge of the position of the moving object). The time period over which any Doppler shifted portion is identified can indicate whether the movement is persistent. Lastly, the difference in frequency of any Doppler shifted portion compared to the frequency of emission allows the establishment of a speed and direction of the moving object. Comparison of one or more of these parameters with its respective threshold (or threshold range) can aid the determination of an unwanted intruder in the monitored zone. If it is determined that there is an unwanted intruder in the monitored zone, the system may proceed to trigger an alert as described above. In the event that an unwanted intruder is not identified after a certain time period in continuous mode, the system carrying out the method may revert to a pulsed mode (in which pulsed signal pulses are emitted, as already described).

The alert may be triggered if at least one of the one or more parameters have a predetermined relationship to its respective predetermined threshold. In other examples, the alert may be triggered only when all of the one or more parameters, or a given number of the one or more parameters, have a predetermined relationship to its respective predetermined threshold. In some examples, comparing one or more parameters comprises comparing two or more parameters, wherein if the two or more parameters all exceed their respective predetermined threshold, then an alert is triggered.

Features and their characteristics and alternatives described above with respect to the method also apply to the same features mentioned below in respect of the system.

In a second aspect there is a system for detecting a moving object within a monitored zone, comprising:
a transmitter for emitting a signal pulse towards the monitored zone, the signal pulse for reflection by objects;
a receiver for receiving a reflected signal;
a controller comprising a processor configured to:
   analyse the reflected signal to identify the presence or absence of a Doppler shifted portion;
wherein if the Doppler shifted portion is present, then the controller is further configured to:
   determine a time delay between emitting of the signal and receiving of the Doppler shifted portion of the reflected signal to indicate a position of a moving object from which the Doppler shifted portion of the reflected signal was reflected;
   determine, using the position, whether the moving object is within the monitored zone.

The transmitter and receiver may be the same entity (transceiver), or may be separate entities. The system will comprise at least one means for emitting (or transmitting) a signal and at least one means for receiving a reflected signal. However, multiple emitters and/or transceivers could be included in the system, and different numbers of each may be present. The signal pulse may be a pulsed ultrasonic signal.

The processor may analyse the received, reflected signal to determine if a Doppler shifted portion is present. For instance, the processor may analyse if there is an unexpected peak in the amplitude demodulated received, reflected signal. If a Doppler shifted portion is identified in the received, reflected signal, then this indicates that at least that portion of the signal was reflected from a moving object.

The processor proceeds to establish the time delay (or time of flight) for the Doppler shifted portion of the received, reflected signal. This is proportional to the distance of the moving object from the transmitter and/or receiver, and so indicative of the position of the moving object. This indication of the position of the moving object can be compared to an indication of the position of the boundaries of the monitored zone. If the position of the moving object is within the boundaries of the monitored zone, then the moving object is considered to be therein.

Preferably, the processor is further configured to, when the moving object is determined to be within the monitored zone, trigger an alert or initiate continuous monitoring of the monitored zone. The continuous monitoring mode is discussed further below, but triggering an alert may comprise one or more of initiating an alarm or transmitting an alert to a predetermined recipient, for instance.

Particular benefits of the system are seen in the implementation of the pulsed mode, which is used to estimate the distance of a moving object in order to avoid switching the system to continuous mode if the moving object is too close or too far from the monitored zone. Consequent advantages include the reduction of power consumption (from reducing the time the system spends in continuous analysis) and reducing false alarms (because the system provides a distance indication to for use when the system is in continuous mode).

Preferably, the system for detecting a moving object within a monitored zone is a system for identifying a possible intruder within the monitored zone, wherein the processor is further configured to:
repeat each of the steps above a predetermined number of times; and
identify a possible intruder if the moving object is determined to be within the monitored zone for more than a threshold number of repetitions; or
determine a change in the position of the moving object over the predetermined number of repetitions, and identify a possible intruder if the change of the position of the moving object meets a predetermined threshold. In other words, once a moving object has been identified in the monitored zone, then the movement could be identified over a number of different pulses such that, if the movement is identified in a threshold number of pulses, then a potential intruder is identified in the monitored zone. In this case, the processor may be further configured to, when a potential intruder is identified within the monitored zone, trigger an alert or initiate continuous monitoring of the monitored zone. In this example, the change of the position of the moving object may be a rate of change of the position of the moving object, a velocity of the moving object, or a trajectory of the moving object.

Preferably, determining whether the moving object is within the monitored zone comprises:
comparing the time delay with a predetermined threshold time delay range;
wherein the moving object is within the monitored zone if the time delay is within the predetermined time delay range. In this example, the determined time delay itself is used in a comparison to determine if the moving object is within the monitored zone.

Alternatively or additionally, the position may be a distance from a transmitter configured to emit the signal pulse, and/or a receiver configured to receive the reflected signal. In this case, the processor being configured to determine, using the position, whether the moving object is within the monitored zone may comprise the processor being configured to:
compare the distance with a predetermined distance threshold range;
wherein the moving object is within the monitored zone if the distance is within the predetermined distance threshold range.

Preferably, the processor being configured to analyse the reflected signal to identify the presence or absence of a Doppler shifted portion comprises the processor being configured to analyse the reflected signal to identify a peak or trough in an amplitude demodulated signal of the received reflected signal, wherein if the amplitude of an identified peak or trough has an absolute value that is more than a predetermined amplitude threshold, then the presence of the Doppler shifted portion is identified. Said demodulated signal represents the result of a comparison of the received, reflected signal packet with the emitted signal packet, wherein the comparison yields a zero signal if no Doppler shift is present. In other words, the portion of the received, reflected signal at the emission frequency and reflected from stationary surfaces may be considered a carrier signal, and a Doppler shifted portion of the received reflected signal reflected from moving surfaces may be considered a modulation signal, modulating said carrier signal.

Alternatively or additionally, identification of a Doppler shifted portion comprises identification that a portion of the received reflected signal has a frequency different from the frequency of the emitted signal pulse by more than a predetermined frequency difference threshold. The presence of a second frequency, different from the first (emission) frequency in the received, reflected signal may be observed by either a plot of frequency of the received, reflected signal versus time, a Fourier transform of the received, reflected signal, or a plot of frequency versus time in the amplitude demodulated signal.

Preferably, the processor configured to initiate continuous monitoring of the monitored zone comprises the processor configured to:
emit a continuous signal towards the monitored zone, for reflection by objects;
receive a reflected signal;
analyse the reflected signal to identify the presence or absence of a Doppler shifted portion indicating a moving object;
wherein if the Doppler shifted portion is present, then the processor is further configured to:
   compare one or more parameter to a respective predetermined threshold, the one or more parameter being:
   an absolute value of an amplitude of an identified peak or trough in any identified Doppler shifted portion;
   a time period over which any Doppler shifted portion is identified; and/or
   a difference in frequency of any Doppler shifted portion compared to the frequency of emission;
wherein if one or more of the parameters is greater than its respective predetermined threshold, then trigger an alert. Continuous monitoring of the monitored zone in this way allows for a more reliable determination of whether the moving object is an unwanted intruder into the monitored zone. In particular, certain characteristics of the moving object can be established from the received, reflected signal including a broad indication of the size of the moving object (from the absolute amplitude of peaks in any identified Doppler shifted portion together with position), an indication of the persistence of movement (from the time period over which any Doppler shifted portion is identified) and an indication of the speed and direction of movement (from the magnitude and sign of the difference in frequency of any Doppler shifted portion compared to the frequency of emission). One or more of these parameters can be determined and then compared to a respective threshold (or threshold range) to determine if the parameters indicate that the movement is from an unwanted intruder (rather than noise, a one-off movement event, or an innocuous movement from, say, an insect).

If an intruder is identified, then an alert can be triggered. The processor being configured to trigger an alert may comprise the processor being configured to perform one or more actions including to initiate an alarm or to transmit an alert to a predetermined recipient (for instance, over a telecommunications network or cellular network).

Preferably, the system as described is located within the cabin of a vehicle. The described system and method may be for identifying a moving object within the cabin of a vehicle, as part of a vehicle intrusion detection system. By using the described system to identify if the moving object is specifically within the monitored zone (by determining an indication of position of the detected moving object) then the system beneficially reduces false triggering of an alert or unwarranted change to a more energy-consuming continuous mode than compared to systems which merely sense a moving object *per se* in a vehicle cabin.

### Brief Description of the Figures

The disclosure can be put into practice in a number of ways, and preferred embodiments will now be described by way of example only and with reference to the accompanying drawings, in which:
FIGURE 1 is a schematic representation of a transmitter and receiver forming part of a movement detection system;
FIGURE 2 is a flow diagram showing the steps of a method for detecting a moving object within a monitored zone;
FIGURE 3 shows a system of a transmitter and a receiver with a stationary and moving object within a monitored area;
FIGURE 4 shows the system of a transmitter and a receiver within the cabin of a vehicle, wherein the cabin is the monitored area;
FIGURE 5 shows plots of a transmitted signal and a signal reflected from a stationary object. FIGURE 5(a) shows a plot of the amplitude of the transmitted signal envelope (being a smooth curve outlining the extremes of the wave packet) over time, FIGURE 5(b) shows a plot of the amplitude of the reflected signal envelope over time, FIGURE 5(c) shows a plot of the amplitude of the demodulated reflected signal over time, and FIGURE 5(d) shows a plot of frequency of the demodulated reflected signal over time;
FIGURE 6 shows plots of a transmitted signal and a signal reflected from a moving object. FIGURE 6(a) shows a plot of the amplitude of the transmitted signal envelope over time, FIGURE 6(b) shows a plot of the amplitude of the reflected signal envelope over time, FIGURE 6(c) shows a plot of the amplitude of the demodulated reflected signal (e.g. the Doppler signal) over time, and FIGURE 5(d) shows a plot of frequency of the demodulated reflected signal (e.g. the Doppler signal) over time;
FIGURE 7 shows a schematic diagram of the components of the system for detecting a moving object within a monitored zone.

In the figures, like parts are denoted by like reference numerals. The figures are not drawn to scale.

### Detailed Description of the Specific Embodiments of the Invention

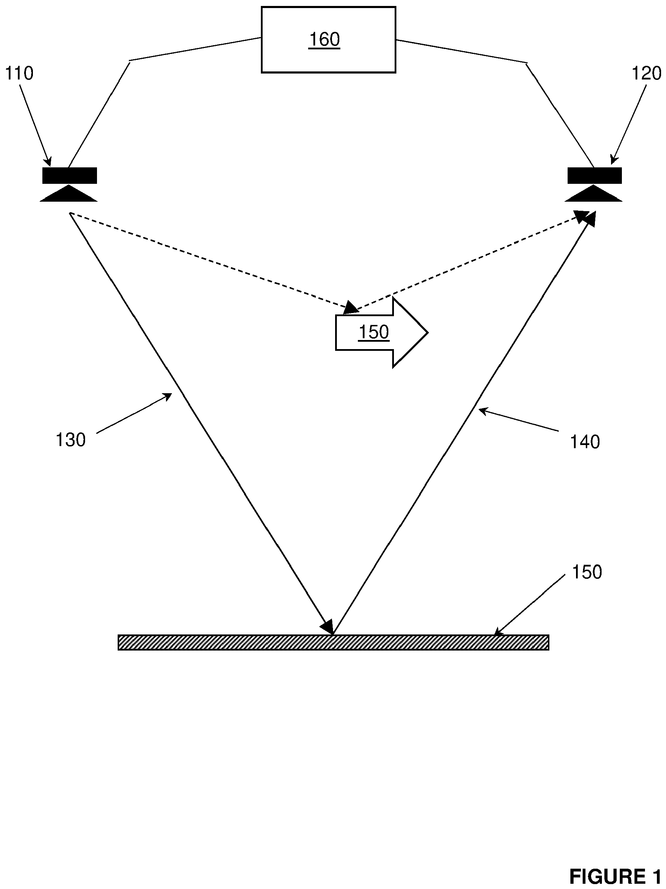

The components of a system for detecting a moving object within a monitored zone are shown in FIGURE 1. A transmitter 110 is arranged to emit an ultrasonic signal 130, and a receiver 120 is arranged to receive reflected portions 140 of the ultrasonic signal. The ultrasonic signal may be reflected from the surface of either a stationary object 150, or the surface of a moving object 150. Each of the transmitter and receiver are connected to a controller 160 comprising a processor.

Although, in FIGURE 1 the transmitter 110 and receiver 120 are shown as separate entities arranged at different locations, the transmitter and receiver may be a combined transceiver arranged at a single location. More than one transmitter, receiver or transceiver could be used to monitor an area. Typically, the locations of the transmitter, receiver and/or transceiver will be fixed, in order to monitor a certain surveillance area. Although, in the system of FIGURE 1 the emitted 130 and reflected 140 signal is a ultrasonic signal, in some examples an electromagnetic signal could be used.

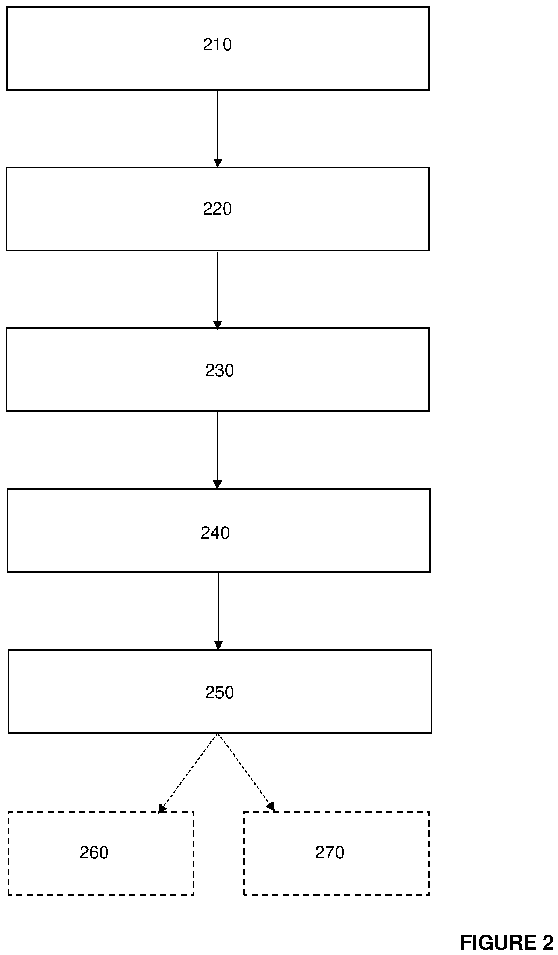

FIGURE 2 shows a flow diagram representing steps of a method for detecting a moving object within a monitored zone, using the system shown in FIGURE 1. In a first step 210, the transmitter 110 emits the ultrasonic signal 130 into or towards the monitored zone (or surveillance area), the ultrasonic signal being suitable for reflection from objects. The ultrasonic signal is emitted in a series of short pulses or wave packets, each pulse being separated from the next pulse by a predetermined time period.

Within each pulse, the ultrasonic signal travels until meeting a barrier, such as a surface of an object. The object may be a stationary or a moving object. Typically, the system will be deployed to monitor an area in which objects will be expected to be stationary (such as inside the cabin of an unoccupied vehicle). The presence of a moving object may indicate unauthorised intrusion into the monitored area. However, in some cases the moving object may be innocuous, such as a small insect or spider, a small vibration, or the swaying of a plant for instance.

According to a second step 220 of the described method, the ultrasonic signal reflected 140 from a surface of an object is received at the receiver 120. The reflected, received ultrasonic signal 140 can be analysed at the processor of the controller 160.

In a third step 230, the reflected, received ultrasonic signal is analysed to identify a Doppler shifted portion, if present, within the reflected signal. A Doppler shifted signal is only present where at least a portion of the signal has been reflected from the surface of a moving object. As will be understood by a person skilled in the art, the Doppler effect or Doppler shift describes a change in the frequency of a wave (longitudinal or transverse) in relation to an observer who is moving relative to the wave source. In the present system, the Doppler shift occurs because, where a moving object is moving relative to the transmitter, each successive wave crest is reflected from a position further from or closer to the transmitter than a previous wave crest. Therefore, each successive wave crest takes a slightly longer or shorter time to reach the receiver, which has the effect of 'stretching' or 'contracting' the wavelength or the period of the wave (or spreading or bunching the wave packet). This in turn causes a decrease or increase in the frequency of the reflected signal, respectively.

The received ultrasonic signal may be analysed to identify a Doppler shifted portion, according to the third step 230. In particular, the reflected signal may be analysed to identify a peak or trough in an amplitude demodulated signal of the received reflected signal, wherein if the amplitude of an identified peak or trough has an absolute value that is more than a predetermined amplitude threshold, then the presence of the Doppler shifted portion is identified The amplitude demodulated received signal can be considered the resultant signal after comparison with the transmission wave packet or pulse, so that regions of the received signal having the same amplitude and frequency as the transmitted signal result in a zero (or near) zero signal, but wherein portions of the received signal that differ in amplitude compared to the emitted signal are shown in the demodulated signal. The demodulated signal (separated from the carrier, wherein the carrier is the portion of the reflected signal at the emission frequency) represents the Doppler signal, and so is zero where no Doppler shifted signal is present.

Alternatively or additionally, a Doppler shifted portion may be identified by determination that a portion of the received reflected signal has a frequency different from the frequency of the emitted signal pulse by more than a predetermined frequency difference threshold. In particular, the frequencies within the received, reflected ultrasonic signal can be analysed by the processor at the controller. The majority of the received signal will have been reflected from the surface of a stationary object, and will have the frequency of the ultrasonic signal originally emitted from the transmitter 110. In contrast, a portion of the received signal that has been reflected from the surface of a moving object will have a frequency that is shifted compared to the frequency of the ultrasonic signal originally emitted from the transmitter 110. Moreover the frequency of the shifted portion of the signal will be well-defined, and so a peak or trough at the shifted frequency will be clear and have an amplitude distinguished from noise..

At a fourth step 240, the processor analyses the time delay between transmission of the signal and receipt of the Doppler shifted portion of the reflected signal in order to determine the position of a moving object from which the Doppler shifted portion of the reflected signal was reflected. The position of the moving object may be indicated by the time delay (time of flight) of the Doppler shifted portion from transmission at the emitter to receipt at the receiver. Alternatively or additionally, the position of the moving object may be determined as a distance from a transmitter configured to emit the signal pulse, and/or from a receiver configured to receive the reflected signal, for example. By calculating the time interval between the start or end of the transmitted pulse packet to the beginning of the Doppler shifted portion in the received signal, then the distance of the moving object can be estimated by taking into account the time of flight of the signal to and from the moving object. Assuming the speed of the signal through air is known, then the distance can be calculated as *distance* = *speed of the signal through air* × *time delay between transmission and receipt.* In either case, for a given system, the transmission of the signal may be measured from the start or end of the transmitted pulse packet (providing the same measure is consistently applied).

At a fifth step 250 the process determines, using the position, whether the moving object is within the monitored zone. This step may comprise comparison of the time delay to a predetermined threshold time delay range. The moving object is considered to be within the monitored zone if the time delay is within the predetermined threshold time delay range. Alternatively, this step may comprise comparing a distance calculated as part of the fourth step (between the moving object and the transmitter and/or receiver) to a predetermined threshold range for the distance. The moving object is then considered to be within the monitored zone if the distance is within the predetermined distance threshold range. The ranges may include an upper and/or a lower bound, wherein the predetermined range may be less than an upper bound, more than a lower bound, or between the upper or lower bound.

In an optional sixth step 260, identification of a moving object within the monitored zone can result in the triggering of an alert. The alert may be any means or mechanism for informing a person or system that a moving object has been identified in the monitored zone. For example, the triggering of an alert may be the triggering or initiation of an alarm (either an alarm located within the monitored zone, or located elsewhere and connected to the system), or triggering or sending an alert to a predetermined recipient. For instance, the alert that is sent may be a voice call, a text message, an IMS message or an application notification, sent over a cellular network or other telecommunication network.

As an alternative, at the optional sixth step 270 the identification of a moving object within the monitored zone can result in initiation of continuous monitoring of the monitored zone. Continuous monitoring can be used to confirm the presence of a moving object in the monitored zone. Moreover, characteristics measured in continuous mode can also provide information on the speed and size of any moving object and its duration of movement, and thereby give further parameters which can be used to distinguish the moving object as an intruder compared to another, innocuous movement or vibration. However, continuous mode is more energy consuming than pulsed mode, and thus beneficially it is only initiated after a moving object has been identified in the pulsed mode according to the first to fifth steps above.

In continuous mode, a continuous signal is emitted from the transmitter, towards and into the monitored zone. The signal may be a continuous sound wave, for instance at ultrasonic frequencies. The continuous signal may be reflected from objects in its path, so as to rebound towards a receiver. As before, the transmitter and receiver may be a single entity (a transceiver) at a single location, or more than one transmitter and or receiver could be used. The reflected signal is received at the receiver, and then analysed at the processor.

The reflected signal is analysed to identify whether an Doppler shifted portion is present, because a Doppler shifted portion would indicate that the signal was reflected from a moving object. The Doppler shifted portion may be identified by analysing the signal, for instance to identify an unexpected feature (such as a peak) in the demodulated received, reflected signal amplitude or to identify an expected feature (peak or trough) in the demodulated received, reflected signal frequency.

Analysis of the Doppler shifted portion of the reflected signal measured in continuous mode provides information on whether the object is approaching or receding, and its speed. Furthermore, based on the autocorrelation of the received signal, some information about the type of movement of the object may be gained. In principle knowledge can also be gained on the size of the object, although this may not be feasible in practice. Combining all this information with the duration of the movement it is possible to determine if the analysed event is linear (or otherwise) and so if the event is 'noise' (from vibrations or ambient noise) or a real intrusion.

More specifically, where a Doppler shifted portion is identified in the reflected signal, the processor may determine one or more parameters associated with that signal. For instance, the processor may identify any one or more of (i) the amplitude of the Doppler shifted portion as a function of time versus signal amplitude; (ii) the time period during which a Doppler shifted portion is identified as a function of time versus signal amplitude; and (iii) the difference in frequency of any Doppler shifted portion compared to the frequency of emission. Each parameter shows different characteristics of the moving object. For instance, the amplitude of (i) is proportional to the cross-sectional size of the reflective surface, and so provides broad information on the size of the object (especially when combined with an indication of the position of the moving object, provided from the original identification of a moving object in 'pulsed mode'); the time period of (ii) provides information on the length of time or persistence of movement, and so may help to distinguish a one-off movement event (for instance, a falling object) compared to sustained movement from an intruder; and the difference in frequency of (iii) provides information on the velocity of the moving object, because a larger difference in frequency indicates a greater speed of the object, and the frequency difference being an increase or decrease provides information on the direction of travel towards or away (approaching or receding) from the emitter and/or receiver.

Once the one or more parameters of the Doppler shifted portion of the signal has been determined, one or more of the parameters is compared to its respective predetermined threshold. In some cases, the predetermined threshold may be a predetermined threshold range. Upon comparison, if one or more of the parameters have a predetermined relationship to its respective predetermined threshold, then an alert may be triggered. For instance, if the amplitude of (i) is greater than a predetermined threshold, this (combined with the already determined indication of the position of moving object) may indicate that the moving object has a cross-sectional size above a certain level (although in practice, size determination may not be feasible). This in turn may be useful, for instance, to distinguish human intruders from insects moving in the monitored zone. Additionally or alternatively, if the time period of (ii) exceeds a predetermined threshold then this indicates a persistent movement within the monitored zone consistent with a living object (human or animal), rather than merely a one-off event such as a falling object. Additionally or alternatively, if the absolute value of the difference in frequency of (iii) is greater than a predetermined upper threshold or lower than a predetermined lower threshold, this indicates that moving object is moving at a speed that is consistent with a human intruder (neither too fast or too slow). This third parameter may be useful to distinguish a real moving object from a portion of signal that appears to be Doppler shifted but is actually erroneous noise.

The alert that is triggered may be the initiation of an alarm, either inside the monitored zone, or at another location. Alternatively or additionally, the alert that is triggered may comprise the transmission of a voice call, a text message, an IMS message and/or an application notification, for example over a cellular or other telecommunication network.

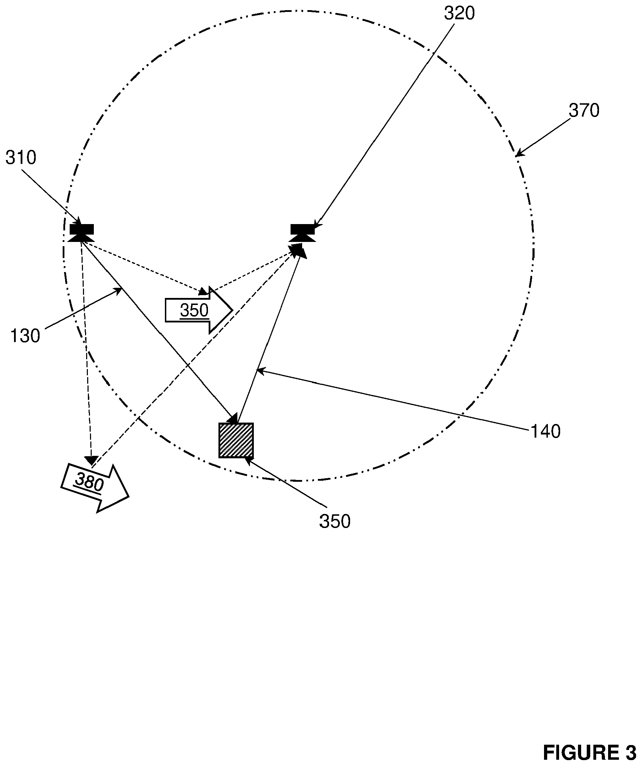

FIGURE 3 shows a simplified diagram of a system for detecting a moving object within a monitored zone. The boundary 370 of the monitored zone is shown, together with the transmitter 310 and receiver 320 as described above. A first moving object 350 is shown within the monitored zone, a second moving object 380 is located outside the monitored zone, and a stationary object 350 is located within the monitored zone.

The method for detecting a moving object within a monitored zone will proceed as discussed with reference to FIGURE 2. For signal reflected from the stationary object 350, no Doppler shifted portion will be apparent at the third step 230 upon analysis of the receive, reflected signal. For the signal reflected from the first moving object 350, a Doppler shifted portion will be identified at the third step 230, and the time delay for the said Doppler shifted portion determined at the fourth step 240. From the time delay, the position of the moving object 350 can be determined to be inside the boundary 370 of the monitored zone at the fifth step. Thus, it is determined that the first moving object 350 is within the monitored zone. Consequently, the system may apply one of the optional sixth steps 260, 270. For instance, the system could move to continuous mode at step 270, or an alert could be triggered directly at step 260.

In comparison, for the signal reflected from the second moving object 380, a Doppler portion will be identified at the third step 230, and the time delay for the said Doppler shifted portion determined at the fourth step 240. From the time delay, the position of the second moving object can be determined to be outside of the boundary 370 of the monitored zone at the fifth step 250. As such, the system and method identifies the moving object as not being within the monitored zone. No new action is taken, and the system and method continue in the pulsed mode.

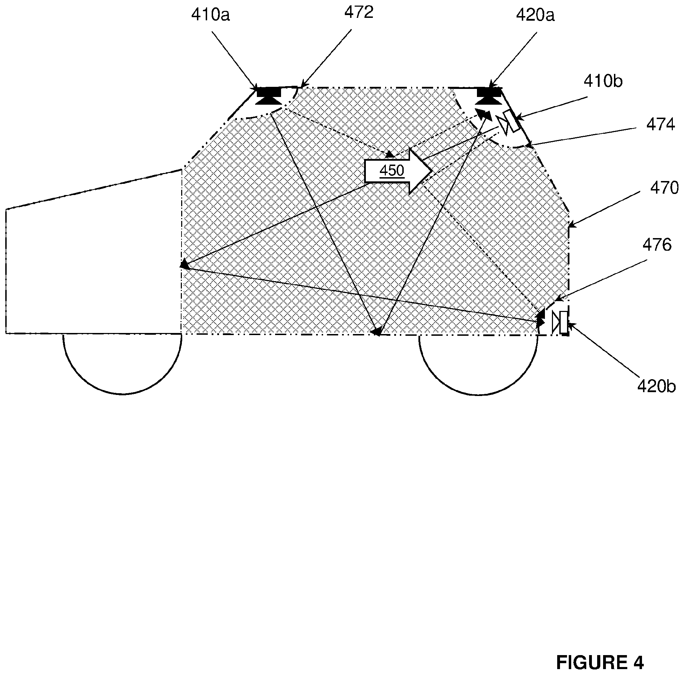

The system and method described above with respect to FIGURES 1, 2 and 3 may be implemented in various different locations and scenarios. The system and method may offer benefits when implemented into a vehicle cabin (for example, inside a car or heavy goods vehicle cabin). In this case, the described receiver and transmitter (or transceiver if used) would be located inside the vehicle cabin. The boundary of the monitored zone would be set as the walls of the vehicle cabin, wherein any predetermined threshold against which a position of a moving object is compared (at fifth step 250, described above) can be set to represent the location of the walls of the cabin with respect to the transmitter and/or receiver (or transceiver). It will be understood that the shape of the cabin will be irregular, and the transmitter and/or receiver (or transceiver) will be arranged at different distances from different portions of the walls of the cabin. As such, the perimeter or boundary of the monitored zone is unlikely to be a fixed and constant distance from a centre of the monitored zone (as shown in the simplified diagram of the system in FIGURE 3). To take account of the irregular shape of the perimeter of the monitored zone (such as the shape of the walls of the cabin of a vehicle), multiple transmitters and/or receivers (or transceivers) can be used, and the position indicated for the moving object with respect to each transmitter and/or receiver (or transceiver) can be triangulated by the processor. This allows establishment of a position of the moving object for comparison with the predetermined threshold representing the perimeter (wherein different thresholds may be applied with respect to measurements at different transmitters, or in different directions). This is shown in FIGURE 4. Triangulation of the distance of the moving object from multiple transmitters/receivers may be used to identify a precise location of the moving object in a monitored space (such as the cabin of a vehicle), although such accurate determination of the position of a moving object may go beyond the necessary requirements of the described monitoring system.

In FIGURE 4, a first and a second transmitter and a first and a second receiver can be seen, wherein the position of the moving object with respect to each of the first and/or the second transceiver can be determined and triangulated, to identify if the moving object is within the monitored zone (here, inside the cabin of a car and shown by a cross-hatched area in FIGURE 4). It will be understood that more than two pairs of transmitters and receivers (or more than two transceivers) could be used in this way.

In FIGURE 4, the monitored zone is shown as being inside the walls 470 of the interior of the car cabin, but also excludes zones immediately around and closest to the first and second transmitter and first and second receivers by setting of interior boundaries 472, 474, 476. These interior boundaries 472, 474, 476 would prevent moving objects such as insects very close to the receiver triggering an alert or causing the system to be moved to continuous mode. In this scenario, when it is determined whether the position of the second moving object is within the monitored zone at the fifth step 250, it will be determined if the moving object is between the cabin walls and the interior boundaries. Only if it is between these positions will the system be moved to the optional sixth steps of triggering an alert 260 or activating continuous mode 270.

It will be understood that an intrusion detection system for a vehicle has certain characteristics. Firstly, the monitored zone has relatively clear and distinct boundaries, as it is desired only that movement or intrusion inside the cabin of the vehicle results in the triggering of an alert. However, such systems are prone to false alarms, both from movement of spiders or insects within the cabin of the vehicle, or from loud noises or vibrations, or even passers-by, outside of the cabin. For instance, in systems relying on the mere identification of the presence of a Doppler shifted portion in the reflected signal, it is not straightforward to distinguish movement within the cabin from a vibration (for instance caused by a loud noise) outside the cabin. It is further not straightforward to distinguish movement within the cabin from a signal that is reflected from a moving object immediately outside the cabin (such as a passer-by to the vehicle). Although further monitoring is sometimes used to help distinguish these events and prevent false alarms, intrusion alert systems in a vehicle tend to be powered by a car or vehicle battery. Therefore, it is desirable to avoid unnecessary further monitoring in order to reduce power consumption from the vehicle battery.

In the present system, the step of analysing the time delay to identify the position of the moving object can look to avoid false identification, either by excluding movements that are very close to the transmitter or receiver (as would occur with insects or spiders), or that are too far from the transmitter or receiver (for instance, outside of the cabin). Accordingly, the system reduces the number of false alerts being triggered, and/or reduces the system being unnecessarily moved to continuous mode for further monitoring (which increases power consumption).

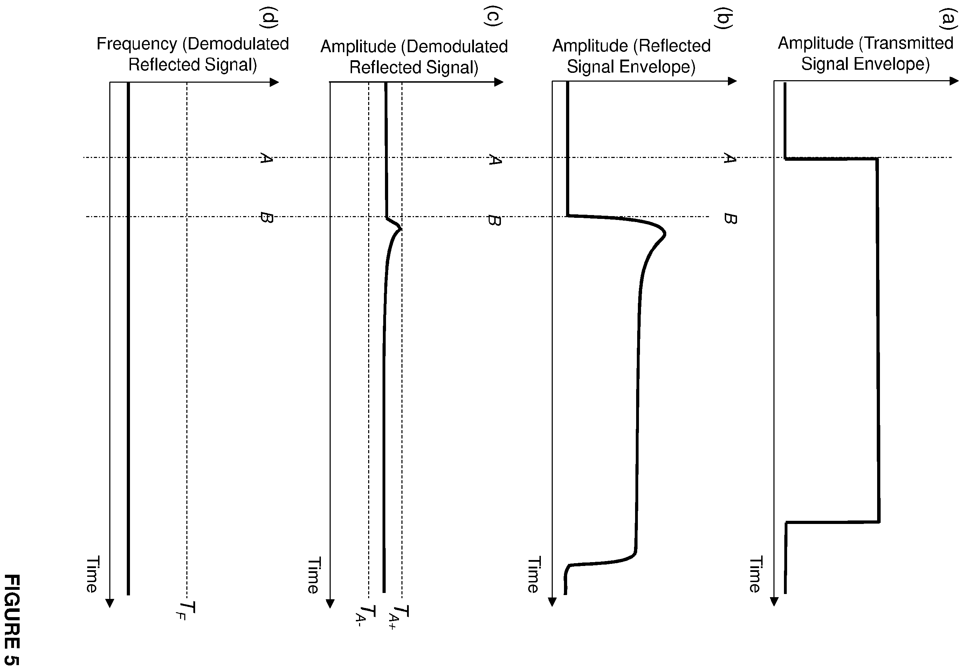

FIGURE 5 shows various characteristics of the emitted and reflected signal pulses, in the event that no moving object is identified in the monitored zone. The plots should be assumed to be smoothed and show an idealised system. FIGURE 5(a) shows a plot of the envelope of an emitted signal pulse, the emitted signal pulse being a sound wave packet. The signal within the pulse will have a substantially constant frequency and the envelope of the emitted signal has a substantially constant amplitude. The pulse has a duty cycle of around 25%, but mainly only the 'on' portion of the pulse is shown in FIGURE 5(a).

FIGURE 5(b) shows a plot of the envelope of the received signal, wherein the received signal is the signal reflected from nearby surfaces. The plot is smoothed and idealised. Reflected signal is received after a short delay from the beginning of transmission of the emitted signal, but transmission and emission can occur simultaneously. An initial peak (beginning from 'B' in FIGURE 5(b)) is seen in the amplitude of the received, reflected signal at the beginning of the time period over which the reflected signal is received, but subsequently the received signal is relatively constant and then reducing to zero, without any further recognisable peak. The initial peak is an expected feature, resulting from the geometry of the cabin and the electronic circuitry.

FIGURE 5(c) shows the demodulated received, reflected signal. This is the resulting signal after demodulation from the transmitted signal as a carrier signal. Although the initial peak in the received signal amplitude in FIGURE 5(b) is visible, no other peaks or features in the demodulated signal are present. The initial peak can be disregarded, and so the otherwise constant (or zero) signal indicates that no Doppler shifted portion is present within the received, reflected carrier signal.

FIGURE 5(d) shows the frequency of the demodulated received, reflected signal as a function of time. It can be seen that the frequency of the signal is approximately constant (and zero). This is a further indication of the lack of any Doppler shifted portion in the received, reflected signal.

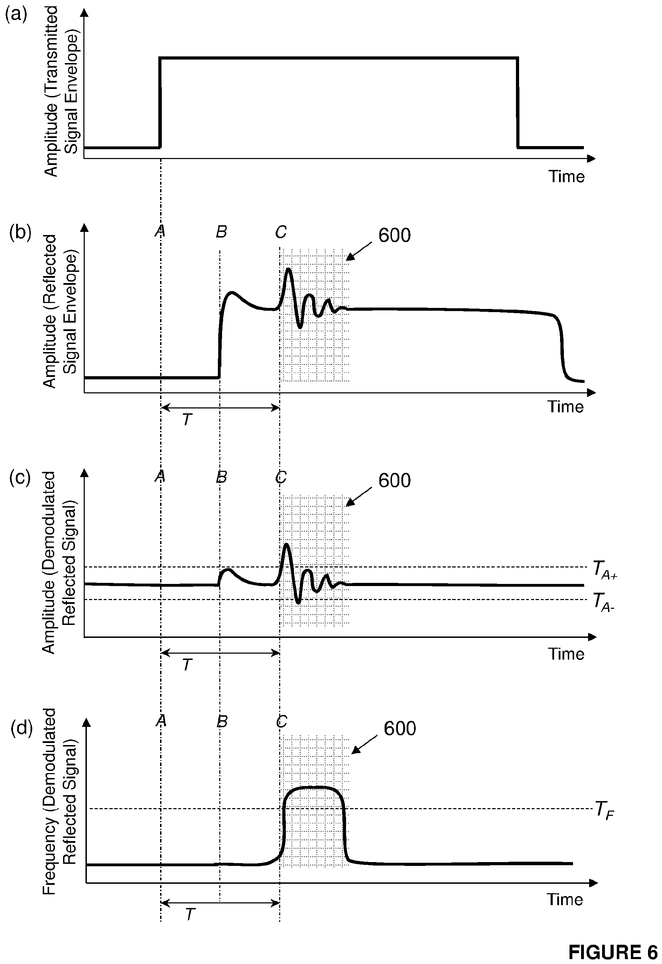

In comparison, FIGURE 6 shows various characteristics of the emitted and reflected signal pulses, in the event that a moving object is identified in the monitored zone. The plots should be assumed to be smoothed and to show an idealised system. FIGURE 6(a) shows a plot of amplitude of the signal envelope as a function of time for the emitted signal pulse, identical to FIGURE 5(a). The signal within the emitted signal pulse will be understood to have an approximately constant frequency with the signal envelope having an approximately constant amplitude..

FIGURE 6(b) shows a plot of the amplitude of a signal envelope over time for the received, reflected signal. After the expected initial peak in the received, reflected signal envelope (also seen immediately after time 'B' in the plot at FIGURE 5(b)), the received, reflected signal envelope has an approximately constant amplitude until reducing to zero, except for a region in which there is a periodic response consisting of a series of peaks and troughs. The peaks and troughs represent a Doppler shifted portion 600 of the signal..

FIGURE 6(c) shows the demodulated received, reflected signal, as discussed above with respect to FIGURE 5(c). The plot of FIGURE 6(c) shows the expected initial transient peak, followed by a region of peaks and troughs of the Doppler shifted portion. Specifically the Doppler shifted portion is identified in the demodulated signal where the absolute value for a peak amplitude in the demodulated signal is greater than a predetermined amplitude threshold *T_{A}.* As such, where a peak or trough in the demodulated signal exceeds the amplitude threshold range *T*_{*A*+} to T_{A-} shown in FIGURE 5(c), a Doppler shifted portion is recognised as having been present in the received, reflected portion of the signal.

For a more complete understanding, FIGURE 6(d) shows a plot of the frequency of the demodulated received, reflected signal as a function of time. However, it will be understood that analysis of the amplitude of the demodulated signal is the main concern for identification of the Doppler shifted portion in the pulsed mode. In the described method, the frequency is not specifically used in the pulsed mode, although it would be understood that information (including identification of a Doppler shifted portion and calculation of the time of flight) could be obtained from analysis of the frequency of the demodulated signal shown.

In FIGURE 6(d) It can be seen that the signal is zero (or near zero) except during a period that coincides with the Doppler shifted portion 600, during which a peak or feature in the frequency (having an amplitude that exceeds threshold *T_{F}*) can be seen in the received, reflected signal. The peak or feature in the frequency is a result of the Doppler shift caused by reflection from a moving object. It will be understood that, although a peak is shown in FIGURE 6(d), it could also be a trough. In any case, a feature indicating a period of increased or decreased frequency of the received, reflected signal will be visible and detectable as a peak in the demodulated signal. Detection of such a feature by the processor upon analysis of the received, reflected signal is an indication of a Doppler shifted portion, pointing to reflection from a moving object. In a particular example, the moving object would expect to yield frequencies in the range of 50-300Hz that are 0.42-2.5m/s.

It will be understood that the time elapsed between a given point of the emitted signal pulse and a given point of the Doppler shifted portion of the received, reflected signal can be calculated. For instance, this may be the time, T, between the beginning of the emitted signal pulse and the beginning of the Doppler shifted portion (as shown in FIGURE 6(b) to 6(d)). However, different reference points in each of the emitted signal pulse and/or Doppler shifted portion of the received, reflected signal could be used wherein the reference points used may be preselected for a given system and applied consistently.

Once the time, T, between a given point of the emitted signal pulse and a given point of the Doppler shifted portion of the received, reflected signal is obtained, a measure of the time of flight (TOF) for the signal to be emitted and then reflected from the surface of the moving object is known. This can subsequently be compared with a predetermined threshold to establish if the moving object is within a monitored zone. Alternatively, given that the speed for propagation of the emitted signal pulse will be known, the distance of the moving object can be obtained and compared to a predetermined distance threshold. In some cases, the position of the moving object will be found by triangulation of information obtained from a number of Doppler shifted portions received at a number of different receivers.

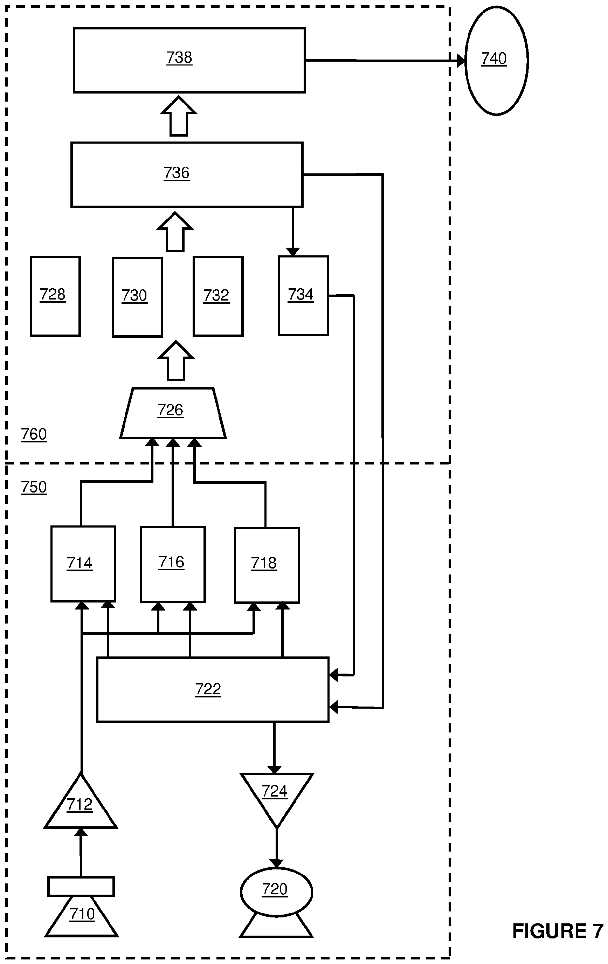

FIGURE 7 shows a block diagram of the components of the system for detecting a moving object within a monitored zone. The system allows for implementation of both the pulsed and continuous mode. The system allows for demodulation of the received, reflected signal, in order to identify the presence (or absence) of a Doppler shifted portion. In the pulsed mode, the system further allows for calculation of the time delay between the emitted and received signal (and more specifically the emitted signal and received Doppler shifted portion), so as to be able to determine if a moving surface from which the signal is reflected is within the monitored zone.

The components shown in FIGURE 7 include: hardware 750 and a processor (microcontroller unit) 760. The hardware 750 includes a receiver 710; receiver amplifier 712; a phase I demodulator 714; a phase Q demodulator 716; an amplitude (AM/Doppler) demodulator 718; control logic 722; a transmitter amplifier 724; and a transmitter 720. The processor 760 includes an analogue-to-digital converter 726; frequency detector 728; phase processor 730; amplitude modulated peak detector 732; wave generator 734; data processor 736; and alarm detection processor 738. An alarm 740 is provided, although it will be understood that the alert triggered by the system may be a local or remote alarm or may comprise another form for the alert (such as notification sent over a cellular network.

A number of combinations of the various described embodiments could be envisaged by the skilled person. All of the features disclosed herein may be combined in any combination, except combinations where at least some of such features and/or steps are mutually exclusive. In particular, the preferred features of the invention are applicable to all aspects of the invention and may be used in any combination. Likewise, features described in non-essential combinations may be used separately (not in combination).

Each feature disclosed in this specification, unless stated otherwise, may be replaced by alternative features serving the same, equivalent or similar purpose. Thus, unless stated otherwise, each feature disclosed is one example only of a generic series of equivalent or similar features.

As used herein, including in the claims, unless the context indicates otherwise, singular forms of the terms herein are to be construed as including the plural form and, where the context allows, vice versa. For instance, unless the context indicates otherwise, a singular reference herein including in the claims, such as "a" or "an" means "one or more". Throughout the description and claims of this disclosure, the words "comprise", "including", "having" and "contain" and variations of the words, for example "comprising" and "comprises" or similar, mean that the described feature includes the additional features that follow, and are not intended to (and do not) exclude the presence of other components.

The use of any and all examples, or exemplary language ("for instance", "such as", "for example" and like language) provided herein, is intended merely to better illustrate the disclosure and does not indicate a limitation on the scope of the disclosure unless otherwise claimed. No language in the specification should be construed as indicating any non-claimed element as essential to the practice of the disclosure.

Any steps described in this specification may be performed in any order or simultaneously unless stated or the context requires otherwise. Moreover, where a step is described as being performed after a step, this does not preclude intervening steps being performed.

## Claims

1. A method for detecting a moving object within a monitored zone, comprising:
emitting a signal pulse towards the monitored zone, for reflection by objects;
receiving a reflected signal;
analysing the reflected signal to identify the presence or absence of a Doppler shifted portion;
wherein if the Doppler shifted portion is identified as present, then:
determining a time delay between emitting of the signal and receiving of the Doppler shifted portion of the reflected signal to indicate a position of a moving object from which the Doppler shifted portion of the reflected signal was reflected;
determining, using the position, whether the moving object is within the monitored zone.

2. The method of claim 1, wherein when the moving object is determined to be within the monitored zone, then the method further comprises:
triggering an alert; or
initiating continuous monitoring of the monitored zone.

3. The method of claim 1 or claim 2, wherein determining whether the moving object is within the monitored zone comprises:
comparing the time delay with a predetermined threshold time delay range;
wherein the moving object is within the monitored zone if the time delay is within the predetermined time delay range.

4. The method of claim 1 or claim 2, wherein the position of the moving object is a distance of the moving object from a transmitter configured to emit the signal pulse, and/or a distance from a receiver configured to receive the reflected signal.

5. The method of claim 3, wherein determining whether the moving object is within the monitored zone comprises:
comparing the distance with a predetermined distance threshold range;
wherein the moving object is within the monitored zone if the distance is within the predetermined distance threshold range.

6. The method of any preceding claim, wherein analysing the reflected signal to identify the presence or absence of a Doppler shifted portion comprises
analysing the reflected signal to identify a peak or trough in an amplitude demodulated signal of the received reflected signal, wherein if the amplitude of an identified peak or trough has an absolute value that is more than a predetermined amplitude threshold, then the presence of the Doppler shifted portion is identified.

7. The method of claim 6, wherein determining the time delay between emitting of the signal and receiving of the Doppler shifted portion of the reflected signal comprises determining the time elapsed between beginning of emitting of the signal pulse and start of a first identified peak or trough in the amplitude demodulated signal of the received reflected signal.

8. The method of claim 2, or any one of claims 3 to 7 when dependent on claim 2, wherein initiation of continuous monitoring of the monitored zone comprises:
emitting a continuous signal towards the monitored zone, for reflection by objects;
receiving a reflected signal;
analysing the reflected signal to identify the presence or absence of a Doppler shifted portion indicating a moving object;
wherein if the Doppler shifted portion is identified as present, then:
comparing one or more parameters to a respective predetermined threshold, the one or more parameters being:
an absolute value of an amplitude of an identified peak or trough in any identified Doppler shifted portion;
a time period over which any Doppler shifted portion is identified; and/or
a difference in frequency of any Doppler shifted portion compared to the frequency of emission;
wherein if at least one of the one or more of the parameters is greater than its respective predetermined threshold, then triggering an alert.

9. The method of claim 2 or claim 8, or any one of claims 3 to 7 when dependent on claim 2, wherein triggering an alert comprises one or more of: initiating an alarm, transmitting an alert to a predetermined recipient.

10. The method of any preceding claim, wherein the signal is a sound wave.

11. A system for detecting a moving object within a monitored zone, comprising:
a transmitter for emitting a signal pulse towards the monitored zone, the signal pulse for reflection by objects;
a receiver for receiving a reflected signal;
a controller comprising a processor configured to:
analyse the reflected signal to identify the presence or absence of a Doppler shifted portion;
wherein if the Doppler shifted portion is identified as present, then the controller is further configured to:
determine a time delay between emitting of the signal and receiving of the Doppler shifted portion of the reflected signal to indicate a position of a moving object from which the Doppler shifted portion of the reflected signal was reflected;
determine, using the position, whether the moving object is within the monitored zone.

12. The system of claim 11, wherein the processor is further configured to, when the moving object is determined to be within the monitored zone:
trigger an alert; or
initiate continuous monitoring of the monitored zone.

13. The system of claim 11 or 12, wherein the processor configured to determine, using the indicated position, whether the moving object is within the monitored zone comprises the processor configured to:
compare the time delay with a predetermined threshold time delay range;
wherein the moving object is within the monitored zone if the time delay is within the predetermined time delay range.

14. The system of 11 or 12, wherein the position is a distance from the transmitter and/or the receiver, and wherein the processor configured to determine, using the position, whether the moving object is within the monitored zone comprises the processor configured to:
compare the distance with a predetermined distance threshold range;
wherein the moving object is within the monitored zone if the distance is within the predetermined distance threshold range.

15. The system of claim 12, or claim 13 or 14 when dependent on claim 12, wherein the processor configured to initiate continuous monitoring of the monitored zone comprises the processor configured to:
emit a continuous signal towards the monitored zone, for reflection by objects;
receive a reflected signal;
analyse the reflected signal to identify the presence or absence of a Doppler shifted portion indicating a moving object;
wherein if the Doppler shifted portion is identified as present, then the processor is further configured to:
compare one or more parameters to a respective predetermined threshold, the one or more parameters being:
an absolute value of an amplitude of an identified peak or trough in any identified Doppler shifted portion;
a time period over which any Doppler shifted portion is identified; and/or
a difference in frequency of any Doppler shifted portion compared to the frequency of emission;
wherein if at least one of the one or more of the parameters is greater than its respective predetermined threshold, then trigger an alert.
